# EUROPEAN PATENT SPECIFICATION

(11) **EP 0 798 279 B1**
(45) Date of publication and mention of the grant of the patent: **08.03.2000**
(21) Application number: 96306108.0
(22) Date of filing: 21.08.1996
(51) Int. Cl.: C04B 35/66

(54) **Wet-gunning method**
Verfahren zum Nassspritzen
Méthode de projection humide

(30) Priority: 27.03.1996 JP 9938696
(43) Date of publication of application: 01.10.1997
(73) Proprietor: Taiko Refractories Co., Ltd., Kitakyushu-shi, Fukuoka 804 (JP)
(72) Inventor: Iwasaki, Itsutoshi, Taiko Refractories Co., Ltd., Kitakyushu-shi, Fukuoka-ken (JP); Abe, Sinichi, Taiko Refractories Co., Ltd., Kitakyushu-shi, Fukuoka-ken (JP)
(74) Representative: Calamita, Roberto

(56) References cited:
- EP-A- 0 180 217
- JP-A- 62 036 071
- US-A- 3 802 894
- US-A- 4 168 177
- DATABASE WPI Section Ch, Week 8712 Derwent Publications Ltd., London, GB; Class L02, AN 87-084047 XP002034984 & JP 62 036 071 A (SHINAGAWA FIRE BRICK) , 17 February 1987
- DATABASE WPI Week 8517 Derwent Publications Ltd., London, GB; AN 85-102000 XP002034985 & JP 60 046 975 A (NIPPON PLIBRIKCO KK.) , 14 March 1995
- abrigded translation of"Recent Development of Gunning Method", Ceramic Data Block 91 and original in Japanese language
- "Guide to Shotcrete", American Concrete Institute (1995)

## Description

The present invention relates to a method for wet-gunning a low-cement, castable refractory material to construct linings of vessels such as tundishes and ladles for molten metals, blast furnace troughs and runners, etc.

Lately, castable refractories with easy installation have been more and more replaced bricks as materials for linings of vessels for molten metals, since castable refractories have been provided which have improved durability. However, casting methods are still disadvantageous in terms of the time and labor needed in the placement of molds in casting. In these respects, gunning methods are advantageous in having reduced time and labor requirements and in versatility of use in repair, because these methods do not require forming with molds and can quickly be used to make partial repairs. Accordingly, gunning methods have been finding more and more applications. Most widely used is the dry-gunning method. However, refractory layers formed by the dry-gunning method are poor in durability and suffer from rebound loss, poor working environment due to dust, etc. Accordingly, developments have been made recently to provide various gunning methods such as a semi-dry gunning method, a wet-gunning method, etc., and refractory materials therefor.

In the semi-dry gunning method, the gunning refractory is premixed with water in a smaller amount than required by a mixer, pneumatically conveyed to a gunning nozzle of a dry-gunning machine, mixed with the remaining amount of water, or with a solution or a suspension containing a hardening agent in the gunning nozzle (or before reaching the gunning nozzle), and then gunned through the nozzle. Semi-dry gunning methods are exemplified in *inter alia* Japanese Patent Laid-Open No. 61-111973, and Japanese Patent Publication Nos. 2-27308, 6-17273, 5-63437 and 5-21866. Though improvements have been achieved to some extent in these semi-dry gunning methods in reducing dust generation and rebound loss, these semi-dry gunning methods still provide the formed refractory layers with poor adhesion, homogeneity and density, since the refractory materials have to be mixed with water by the gunning nozzle very quickly; resulting in poor mixing at an unstable water ratio. In some semi-dry gunning methods disclosed, for instance, in Japanese Patent Publication Nos. 2-27308 and 6-17273, refractory materials similar to those used in the present invention are premixed with water in an amount of 1/5-3/4 of the normally required amount using a mixer, pneumatically conveyed to a gunning nozzle of a dry-gunning machine with the ultra-fine powder of the refractory materials partially dispersed in water, and gunned at a small water ratio. However, such methods are still disadvantageous in that the formed refractory layers do not have homogeneous structures because of poor dispersion of the ultra-fine powder, etc.

In the wet-gunning method, gunning refractories are premixed with water in a total amount normally required for gunning using a mixer and then gunned. In this case, it is possible to add a small amount of a solution of a hardening agent or a hardening-adjusting agent to the gunning refractories in a gunning nozzle. With respect to the conveyance of gunning materials, the wet-gunning method is classified into a gunning machine method and a pumping method. In the case of the pumping method, compressed air is introduced into the gunning nozzle to spray gunning materials. The present invention belongs to the latter category. Depending on the amount of water added, there are provided gunning materials with various workabilities ranging from the plastic level to the slurry level. This method is exemplified in *inter alia* Japanese Patent Publication Nos. 57-7350, 62-21753, 2-33665, 2-1795. Because the gunning materials disclosed in Japanese Patent Publication No. 57-7350 are in the form of a slurry having a water content of 10-20 %, they are not expected to be formed into dense refractory layers suitable for linings of vessels for molten metals. In the latter three methods, because the mixed materials are not hardenable at room temperature, those produced in factories can be stored for a while. In all of these methods, however, particle size distributions and bonding mechanisms of the gunning materials are such that particles contained in the gunning materials have maximum particle sizes of 4mm or less, and such that bonding is achieved without dispersion and coagulation of ultra-fine particles, which are still not different from the gunning technologies of the previous generation. In addition, since the compositions of the gunning materials used in these methods are such that they can be stored for a while, they are still inferior to castable refractories, especially to low-cement, castable refractory materials, in terms of the density and durability of the formed refractory layers.

Accordingly, an object of the present invention is to provide a method for forming a refractory layer, which is as easy as a gunning method while providing resultant refractory layers having as good durability as that obtained by the casting methods.

As a result of intense research in view of the above object, it has been discovered that when a low-cement castable refractory which shows high density, strength and erosion resistance with a small amount of water is wet-gunned with its particle size distribution and composition unchanged from those of conventional castable refractories, it is possible to produce refractory layers much superior to those formed by the conventional gunning methods and comparable to those formed by the casting methods in quality and erosion resistance, and that when an alkali silicate solution is added as a shape retention agent to the wet-gunning refractory at the time of gunning, the wet-gunning refractory shows improved shape retention while reducing fluidity. The present invention has been completed based on these findings.

Thus, the wet-gunning method according to the present invention comprises the steps of:
(a) mixing 100 weight % of a refractory composition comprising 67-97.5 weight % of refractory aggregate having a particle size of 10 mm or less, 2-25 weight % of ultra-fine refractory powder having a particle size of 10 µm or less and 0.5-8 weight % of alumina cement, with 0.01-1.0 weight % (outer percentage) of a dispersing agent to prepare a low-cement, castable refractory material;
(b) premixing the low-cement, castable refractory material with water using a mixer, thereby providing a castable mixture;
(c) conveying the mixture to a gunning nozzle by a pump; and
(d) gunning 100 weight % (on a solid basis) of the low-cement, castable refractory material together with 0.1-1.5 weight % (outer percentage) of an alkali silicate solution having an SiO₂/R₂O molar ratio of 2.0-3.3 (R₂O is an alkali metal oxide) and a Baumé degree of 40 or more at 15°C as a shape retention agent by means of compressed air through the gunning nozzle.

Throughout this specification, the "outer percentage" of for example a component A added to for example a composition B+C+D is defined as [A/(B+C+D)] x 100%.

### [1] Composition of low-cement, castable refractory material

### (A) Refractory composition

The refractory composition comprises (A-1) refractory aggregate, (A-2) ultra-fine refractory powder and (A-3) alumina cement.

### (A-1) Refractory aggregate

The refractory aggregate used for the present invention may be selected from the group consisting of electrofused alumina, sintered alumina, bauxite, kyanite, andalusite, mullite, chamotte, pyrophyllite, silica, alumina-magnesia spinel, magnesia, zircon, zirconia, silicon carbide, graphite, pitch, etc., and two or more of them may be combined if necessary. The particle size of the refractory aggregate is 10 mm or less. When the particle size of the refractory aggregate is more than 10 mm, pumping efficiency is lowered with increased rebound loss. The amount of the refractory aggregate is 67-97.5 weight % per 100 weight % of the refractory composition. The preferred amount of the refractory aggregate is 74-94 weight %.

### (A-2) Ultra-fine refractory powder

The ultra-fine refractory powder used for the present invention may be selected from the group consisting of amorphous silica, refractory clay, ultra-fine silica powder, ultra-fine alumina powder, ultra-fine titania powder, ultra-fine mullite powder, ultra-fine zirconia powder, ultra-fine chromia powder, ultra-fine silicon carbide powder, ultra-fine carbon powder, etc., and two or more of them may be combined if necessary. The particle size of the ultra-fine refractory powder is 10 µm or less, preferably 1 µm or less. When the particle size of the ultra-fine refractory powder is more than 10 µm, the water-reducing effect is lowered when combined with a dispersing agent. When the particle size of the ultra-fine refractory powder is 1 µm or less, the water-reducing effect is remarkable.

The amount of the ultra-fine refractory powder is 2-25 weight % per 100 weight % of the refractory composition. When the amount of the ultra-fine refractory powder is less than 2 weight %, the water-reducing effect is lowered. When the amount of the ultra-fine refractory powder is more than 25 weight %, an increased amount of water is needed for gunning, and the resultant refractory suffers from a large shrinkage after burning. The preferred amount of the ultra-fine refractory powder is 5-20 weight %.

### (A-3) Alumina cement

The alumina cement used for the present invention is preferably chosen from those belonging to JIS class 1, 2 or 3. The amount of the alumina cement is 0.5-8 weight % per 100 weight % of the refractory composition. When the amount of the alumina cement is less than 0.5 weight %, the resultant refractory layer shows insufficient strength. With more than 8 weight % of the alumina cement, the resultant refractory layer suffers from a much decreased erosion resistance, The preferred amount of the alumina cement is 1-6 weight %.

### (B) Dispersing agent

The dispersing agent used for the present invention is preferably selected from the group consisting of alkali metal salts of condensed phosphoric acids such as sodium hexametaphosphate, etc.; alkali metal silicates; organic acids such as carboxylic acids, humic acids, alkyl sulfonic acids, aromatic sulfonic acids, etc. and alkali metal salts thereof, etc. Two or more of them may be combined if necessary. The amount of the dispersing agent is 0.01-1 weight % (outer percentage) per 100 weight % of the refractory composition. When the amount of the dispersing agent is less than 0.01 weight %, the ultra-fine refractory powder is not sufficiently dispersed in the refractory composition. With more than 1 weight %, optimum dispersion is not achieved.

The low-cement, castable refractory material of the present invention may further contain agents for adjusting working time arid hardening time, thickeners, organic, inorganic or metal fibers, agents for preventing dry-explosive cracking such as metallic Al, etc.

### [2] Gunning method

The low-cement, castable refractory material having the above composition is mixed with water. The amount of water mixed is determined such that the low-cement, castable refractory material is castable under usual conditions. Though the amount of water may depend largely on the particle size distribution and the porosity of the refractory aggregate, it is conveniently 5-8 weight % (outer percentage) per 100 weight % of the low-cement, castable refractory material. The resultant mixture is conveyed to a gunning nozzle by a pump and gunned through the nozzle while adding an alkali silicate solution and compressed air.

The alkali silicate solution is used as a shape retention agent to reduce the fluidity of the low-cement, castable refractory material thereby providing shape retention thereto. Alkali silicate solution is superior to other shape retention agents in the following respects: (1) the alkali silicate solution gives good adhesion to the gunning refractory, (2) a refractory layer resulting from the gunning material containing the alkali silicate solution does not adversely affect the quality of molten iron or steel, because the alkali silicate solution does not contain undesirable compounds of phosphorus or boron, etc., and (3) the alkali silicate solution is easily available as a liquid.

The alkali silicate solution has an SiO₂/R₂O molar ratio of 2.0-3.3 (R₂O is an alkali metal oxide) and a Baumé degree of 40 or more at 15°C. When the Baumé degree of the alkali silicate solution at 15°C is less than 40, the shape retention is lowered, resulting in sagging of the gunned refractory material. Widely commercially available as the alkali silicate solution are sodium silicate solutions and potassium silicate solutions. In particular, the sodium silicate solution is classified by JIS, and those identified as JIS 1, JIS 2, JIS 3, etc. may conveniently be used. From the viewpoint of cost, sodium silicate solution may preferably be used.

The viscosity of the alkali silicate solution is determined by the molar ratio of SiO₂/R₂O, Baumé degree and temperature. At a constant Baumé degree, the higher the molar ratio of SiO₂/R₂O and the lower the temperature, the greater the viscosity of the alkali silicate solution. Accordingly, it is difficult to inject the solution into a nozzle when the viscosity thereof is high at a low ambient temperature in the winter. In this case, the alkali silicate solution should be warmed before it is supplied to the nozzle. Though the dilution of the alkali silicate solution with water lowers the viscosity, it leads to decreased shape retention, resulting in sagging of the gunned refractory material, if its Baumé degree decreases to less than 40 at 15°C.

The amount of the alkali silicate solution is 0.1-1.5 weight % (outer percentage) per 100 weight % of low-cement, castable refractory material, on a solid basis. When the amount of the alkali silicate solution is less than 0.1 weight %, sagging of the gunned refractory occurs because of insufficient shape retention. When the amount of the alkali silicate solution is more than 1.5 weight %, the alkali silicate solution is prematurely solidified by gelation, resulting in poor adhesion to the substrate, and a decrease in the high-temperature strength and erosion resistance. The preferred amount of the alkali silicate solution is 0.2-1.0 weight %.

The present invention will be explained more specifically by the following non-limiting Examples and Comparative Examples:

### Examples 1-2, Comparative Examples 1-3

### 1. Composition of low-cement, castable refractory material

The formulations as shown in Table 1 were used for each Example and Comparative Example.

### 2. Formation of Layer

Refractory aggregate (A-1), ultra-fine refractory powder (A-2) and alumina cement (A-3) in formulations as shown in Table 1 were mixed to produce refractory compositions (A). Dispersing agents (B) and agents for preventing dry-explosive cracking (C) were added in formulations (outer percentages) as shown in Table 1 to the refractory compositions (A) to produce low-cement, castable refractory materials. As shown in Table 1, in Examples 1-2, each low-cement, castable refractory material was premixed with a predetermined amount of water (E), and gunned together with a sodium silicate solution (D) having an SiO₂/Na₂O molar ratio of 2.10 and a Baumé degree of 50 at 15°C (outer percentage) and compressed air to form a refractory layer.

Used in Comparative Examples 2-3 were dry-gunning materials, which were formed into refractory layers by a semi-dry gunning method.

Each of the refractory layers thus formed was cut and dried to form test pieces. The total amount of water used for the gunning method is shown in row (F) of Table 1. In Comparative Example 1, the low-cement, castable refractory material was premixed with water (E) in an amount as shown in Table 1, cast into a mold and cured to prepare test pieces. The methods for producing the refractory layers in the Examples and Comparative Examples are also shown in Table 1.

**Table 1**

| | Example | | Com.Ex. | | |
|---|---|---|---|---|---|
| | 1 | 2 | 1 | 2 | 3 |
| Composition and Method | | | | | |
| Percentages of Components (weight %) | | | | | |
| (A) Refractory Composition | 100 | 100 | 100 | 100 | 100 |
| (A-1) Refractory Aggregate | | | | | |
| Electrofused Alumina (>5mm)⁽¹⁾ | 17 | - | 17 | - | - |
| Electofused Alumina (≤5mm)⁽²⁾ | 35 | 45 | 35 | - | - |
| Electrofused Alumina (≤3mm)⁽³⁾ | - | - | - | 40 | 40 |
| Electrofused Alumina (≤mm)⁽⁴⁾ | 16 | 25 | 16 | 26 | 30 |
| Magnesia Clinker⁽⁵⁾ | - | 8 | - | - | 8 |
| Silicon Carbide⁽⁶⁾ | 18 | - | 18 | 18 | - |
| Pitch⁽⁷⁾ | 2 | - | 2 | 2 | - |
| (A-2) Ultra-Fine Refractory Powder | | | | | |
| Clay | 1 | - | 1 | 3 | 3 |
| Ultra-Fine Alumina Powder⁽⁸⁾ | 5 | 1 6 | 5 | 5 | 1 3 |
| Amorphous Silica⁽⁹⁾ | 3 | 1 | 3 | 3 | 1 |
| Carbon Black⁽¹⁰⁾ | 1 | - | 1 | 1 | - |
| (A-3) Alumina Cement⁽¹¹⁾ | 2 | 5 | 2 | 2 | 5 |
| (B) Dispersing Agent | | | | | |
| Sodium Hexametaphosphate⁽¹²⁾ | 0.1 | 0.1 | 0.1 | - | - |
| (C) Agent for Preventing Dry-Explosive Cracking | | | | | |
| Metallic Aluminum⁽¹²⁾ | 0.5 | - | 0.5 | 0.5 | - |
| Organic Fibers⁽¹²⁾ | - | 0.05 | - | - | 0.05 |
| (D) Sodium Silicate Solution⁽¹³⁾ | 0.4 | 0.5 | - | - | - |
| (E) Premixed Water⁽¹³⁾ | 5.2 | 5.5 | 5.2 | 2.0 | 2.0 |
| (F) Total Water in Gunned Layerl⁽¹³⁾ | 5.4 | 5.8 | - | 11.5 | 12.3 |
| Method for Forming Refractory Layer | WG⁽¹⁴⁾ | WG | CA⁽¹⁵⁾ | SD⁽¹⁶⁾ | SD |

| | | | | | |
|---|---|---|---|---|---|
| Note: (1) Particle size range: more than 5 mm and 10 mm or less. | | | | | |
| (2) Particle size range: 1-5 mm. | | | | | |
| (3) Particle size range: 1-3 mm. | | | | | |
| (4) Particle size range: 1 mm or less. | | | | | |
| (5) Particle size range: 1 mm or less. | | | | | |
| (6) Particle size range: 150 µm or less. | | | | | |
| (7) Particle size range: 1 mm or less. | | | | | |
| (8) Particle size: 10 µm or less. | | | | | |
| (9) Particle size: 1 µm or less. | | | | | |
| (10) Particle size: 1 µm or less. | | | | | |
| (11) JIS Class 1. | | | | | |
| (12) Outer percentage per 100 weight % of (A). | | | | | |
| (13) Outer percentage per 100 weight % of (A) + (B) on a dry basis. | | | | | |
| (14) WG: Wet-gunning method according to the present invention. | | | | | |
| (15) CA: Usual casting method. | | | | | |
| (16) SD: Usual semi-dry gunning method. | | | | | |

### 3. Evaluation

### (1) Evaluation of test pieces

After measuring bulk specific gravity at 1000°C and 1500°C, respectively, each of the test pieces was tested with respect to its properties by the following methods. The results are shown in Table 2.

### (i) Bending strength (kg/cm²)

Each test piece was measured with respect to bending strength after burning at 1000°C and 1500°C, respectively, and high-temperature bending strength at 1500°C according to JIS R2553.

### (ii) Index of erosion

In Example 1 and Comparative Examples 1-2, a rotation erosion test was carried out at 1500°C for 5 hours using blast furnace slag as an erosive material. In Example 2 and Comparative Example 3, the rotation erosion test was carried out at 1650°C for 5 hours using converter slag (CaO/SiO₂ molar ratio: 4.2) as an erosive material. The eroded test. pieces were collected to measure erosion depth thereof. The erosion depth was divided by the time (hour) to calculate an index of erosion expressed by a relative value; the indexes of erosion resistance in Comparative Examples 1 and 2 are expressed by relative values assuming that the index of erosion in Example 1 is 100, and the index of erosion in Comparative Example 3 is expressed by a relative value assuming that the index of erosion in Example 2 is 100.

**Table 2**

| Properties | Example | | Comparative Example | | |
|---|---|---|---|---|---|
| | 1 | 2 | 1 | 2 | 3 |
| Bulk Specific Gravity | | | | | |
| at 1000°C | 2.85 | 2.95 | 2.90 | 2.31 | 2.38 |
| at 1500°C | 2.88 | 2.90 | 2.93 | 2.21 | 2.30 |
| Bending Strength after Burning⁽¹⁾ | | | | | |
| at 1000°C | 61 | 83 | 78 | 23 | 45 |
| at 1500°C | 125 | 210 | 160 | 150 | 150 |
| High-Temperature Bending Strength⁽¹⁾ | | | | | |
| at 1500°C | 31 | 35 | 37 | 9 | 13 |
| Index of Erosion⁽²⁾ | 100 | 100 | 82 | 375 | 315 |

| | | | | | |
|---|---|---|---|---|---|
| Note: (1) kg/cm². | | | | | |
| (2) Relative value assuming that Example 1 or 2 was 100. | | | | | |

### (2) Field test

Each castable refractory in Example 1 and Comparative Examples 1 and 2 was applied to an actual main trough of a blast furnace by each method listed in Table 1 to measure an average melt depth (mm) per 1000 tons of molten pig iron. The results are shown in Table 3.

**Table 3**

| Properties | Example | Comparative Example | |
|---|---|---|---|
| | 1 | 1 | 2 |
| Rate of Erosion Loss (mm per 1000 tons of molten pig iron) | 5.9 | 5.2 | 19.3 |

In Example 1 and Comparative Examples 1 and 2, all using Al₂O₃-SiC-C refractory aggregate with substantially the same formulations, a comparison was made of the quality and the erosion resistance of the formed refractory layers. It has been found that the gunning method of Example 1 is superior to the usual semi-dry gunning method of Comparative Example 2, though the former is a little inferior to the casting method of Comparative Example 1 which needs time-consuming mold construction work. In Example 2 and Comparative Example 3, both using Al₂O₃-MgO refractory aggregate, Example 2 is superior to Comparative Example 3 in quality and erosion resistance of the formed refractory layer.

As described in detail above, according to the present invention, low-cement, castable refractory materials with its particle size distribution and composition not differing from those of usual castable refractories can be mixed with water using a mixer, conveyed to a gunning nozzle by a pump and gunned together with a small amount of an alkali silicate solution as a shape retention agent, to form refractory layers, which are markedly superior to those formed by the usual gunning methods and comparable to those formed by the casting methods in quality and erosion resistance.

## Claims

1. A wet-gunning method comprising the steps of:
(a) mixing 100 weight % of a refractory composition comprising 67-97.5 weight % of refractory aggregate having a particle size of 10 mm or less, 2-25 weight % of ultra-fine refractory powder having a particle size of 10 µm or less and 0.5-8 weight % of alumina cement, with 0.01-1.0 weight % (outer percentage) of a dispersing agent to prepare a low-cement, castable refractory material;
(b) premixing said low-cement, castable refractory material with water using a mixer, thereby providing a castable mixture;
(c) conveying said mixture to a gunning nozzle by a pump; and
(d) gunning 100 weight % (on a solid basis) of said low-cement, castable refractory material together with 0.1-1.5 weight % (outer percentage) of an alkali silicate solution having an SiO₂/R₂O molar ratio of 2.0-3.3 (R₂O is an alkali metal oxide) and a Baumé degree of 40 or more at 15°C as a shape retention agent by means of compressed air through said gunning nozzle.

2. A wet-gunning method as claimed in claim 1, wherein the amount of said shape retention agent is 0.2-1.0 weight % per 100 weight % of said low-cement, castable refractory material.

3. A wet-gunning method as claimed in claim 1 or claim 2, wherein said alkali silicate solution is a sodium silicate solution or a potassium silicate solution.

## Patentansprüche

1. Naßtorkretierverfahren, umfassend die Schritte:
(a) Mischen von 100 Gewichtsprozent einer feuerfesten Masse, umfassend 67-97,5 Gewichtsprozent feuerfesten Zuschlagstoff mit einer Teilchengröße von 10 mm oder weniger, 2-25 Gewichtsprozent sehr feines feuerfestes Pulver mit einer Teilchengröße von 10 µm oder weniger und 0,5-8 Gewichtsprozent Tonerdezement, mit 0,01-1,0 Gewichtsprozent (äußerer Prozentsatz) eines Dispergiermittels zur Herstellung eines zementarmen, gießbaren, feuerfesten Materials;
(b) Vorvermischen des zementarmen, gießbaren, feuerfesten Materials mit Wasser unter Verwendung eines Mischers, wodurch ein gießbares Gemisch bereitgestellt wird;
(c) Transportieren des Gemisches mit einer Pumpe zu einer Torkretierdüse; und
(d) Torkretieren von 100 Gewichtsprozent (auf Feststoffbasis) des zementarmen, gießbaren, feuerfesten Materials, zusammen mit 0,1-1,5 Gewichtsprozent (äußerer Prozentsatz) einer Alkalimetallsilikatlösung, die ein Molverhältnis von SiO₂/R₂O von 2,0-3,3 (R₂O ist ein Alkalimetalloxid) und bei 15°C einen Baumé-Grad von 40 oder größer aufweist, als Formbeibehaltungsmittel mit Hilfe von Preßluft durch die Torkretierdüse.

2. Naßtorkretierverfahren nach Anspruch 1, wobei die Menge des Formbeibehaltungsmittels 0,2-1,0 Gewichtsprozent pro 100 Gewichtsprozent des zementarmen, gießbaren, feuerfesten Materials ist.

3. Naßtorkretierverfahren nach Anspruch 1 oder Anspruch 2, wobei die Alkalimetallsilikatlösung eine Natriumsilikatlösung oder eine Kaliumsilikatlösung ist.

## Revendications

1. Procédé de projection par voie humide comprenant les étapes consistant à :
(a) mélanger 100 % en poids d'une composition réfractaire comprenant 67 à 97,5 % en poids de granulat réfractaire ayant une taille de particules de 10 mm ou moins, 2 à 25 % en poids de poudre réfractaire ultrafine ayant une taille de particules de 10 µm ou moins et 0,5 à 8 % en poids de ciment alumineux, avec 0,01 à 1,0 % en poids (pourcentage externe) d'un agent dispersant pour préparer un matériau réfractaire coulable pauvre en ciment ;
(b) prémélanger ledit matériau réfractaire coulable pauvre en ciment avec de l'eau en utilisant un mélangeur, pour produire ainsi un mélange coulable ;
(c) transporter ledit mélange vers une buse de projection au moyen d'une pompe ; et
(d) projeter 100 % en poids (exprimé en matière sèche) dudit matériau réfractaire coulable pauvre en ciment en même temps que 0,1 à 1,5 % en poids (pourcentage externe) d'une solution de silicate alcalin ayant un rapport molaire SiO₂/R₂O de 2,0 à 3,3 (R₂O est un oxyde de métal alcalin) et un degré Baumé de 40 ou plus à 15°C comme agent de rétention de forme, au moyen d'air comprimé à travers ladite buse de projection.

2. Procédé de projection par voie humide tel que revendiqué dans la revendication 1, dans lequel la quantité dudit agent de rétention de forme est de 0,2 à 1,0 % en poids pour 100 % en poids dudit matériau réfractaire coulable pauvre en ciment.

3. Procédé de projection par voie humide tel que revendiqué dans la revendication 1 ou la revendication 2, dans lequel ladite solution de silicate alcalin est une solution de silicate de sodium ou une solution de silicate de potassium.
